# EUROPÄISCHE PATENTSCHRIFT

(11) **EP 1 232 974 B1**
(45) Veröffentlichungstag und Bekanntmachung des Hinweises auf die Patenterteilung: **14.06.2006**
(21) Anmeldenummer: 02405076.7
(22) Anmeldetag: 05.02.2002
(51) Int. Cl.: B65G 54/02, B65G 23/18, B65G 35/08

(54) **Fördersystem**
Conveyor system
Système de transport

(30) Priorität: 07.02.2001 CH 2152001
(43) Veröffentlichungstag der Anmeldung: 21.08.2002
(73) Patentinhaber: Denipro AG, 8570 Weinfelden (CH)
(72) Erfinder: Büchi, Robert, 8570 Weinfelden (CH); Hinder, Daniel, 9500 Wil (CH)
(74) Vertreter: Frei, Alexandra Sarah

(56) Entgegenhaltungen:
- EP-A- 0 416 453
- EP-A- 0 709 320
- WO-A-99/33731
- DE-A- 19 916 922
- FR-A- 2 085 160
- US-A- 2 824 638
- US-A- 4 088 213
- US-A- 5 277 125

## Beschreibung

Die Erfindung liegt auf dem Gebiete der Fördertechnik und betrifft ein Fördersystem das eine grosse Zahl von entlang vorgegebenen Förderwegen bewegbaren Förderelementen aufweist sowie mindestens ein ortsfest angeordnetes Antriebsmittel, das ärtlich menten aufweist sowie mindestens ein ortsfest angeordnetes Antriebsmittel, das örtlich beschleunigend oder bremsend auf Förderelemente wirkt.

Die Förderelemente sind mit konstanten oder variablen Abständen voneinander, über gelenkige oder flexible Verbindungen zu einer Kette verbunden oder sie sind voneinander unabhängig entlang der Förderwege verfahrbar und werden, wo notwendig oder vorteilhaft, durch geeignete Führungsmittel geführt. Solche Führungsmittel sind beispielsweise Führungskanäle oder kanalähnliche Schienenanordnungen, entlang denen die Förderelemente rollen oder gleiten. Als Führungsmittel können auch Kettenräder zur Anwendung kommen, die mit den Förderelementen örtlich im Eingriff stehen.

Das mindestens eine Antriebsmittel wirkt örtlich beschleunigend oder bremsend auf Förderelemente, die sich gerade im Wirkungsbereich des Antriebsmittels (Antriebsbereich) befinden und die gegebenenfalls die beschleunigende oder bremsende Wirkung durch Ziehen oder Stossen auf andere Förderelemente übertragen.

Fördersysteme der genannten Art werden beispielsweise angewendet für die Verarbeitung von Stückgut, wo grosse Zahlen von gleichen oder ähnlichen Gegenständen in einer Mehrzahl von Verarbeitungsschritten verarbeitet werden. Die Gegenstände werden dabei einzeln von beispielsweise Greifern gehalten, wobei je ein Greifer an einem Förderelement angeordnet ist. Für Verarbeitungsprozesse oder Teile davon, in denen alle Gegenstände hintereinander dieselbe Sequenz von Verarbeitungsschritten in regelmässig getakteter Weise durchlaufen, sind die Förderelemente vorteilhafterweise zu einer Kette zusammengeschlossen. Für Verarbeitungsprozesse oder Teile davon, in denen die Gegenstände individuelle Sequenzen von Verarbeitungsschritten durchlaufen und/oder in Bearbeitungsstationen individuell bearbeitet werden, und dadurch die Förderwege einzelner Gegenstände voneinander verschieden sein können, kann mit voneinander unabhängigen Förderelementen verhindert werden, dass Gegenstände wiederholt von einem Greifer an einen anderen Greifer übergeben werden müssen.

Antriebe für Fördersysteme der genannten Art sind beispielsweise umlaufende Zahnräder oder Zahnriemen, die für die Übertragung einer Antriebskraft mit den Förderelementen formschlüssig und ohne wesentlichen Schlupf in Eingriff gebracht werden. Durch einen derartigen Eingriff verlieren voneinander unabhängige Förderelemente ihre Unabhängigkeit weitgehend, denn alle im Eingriff stehenden Förderelemente sind zwangsweise der Fördergeschwindigkeit und dem Fördertakt des Antriebs unterworfen. Dies bedeutet insbesondere im Bereich, in dem die Förderelemente mit dem Antrieb in Eingriff kommen, ruckartige Förderbewegungen, bei denen hohe Kräfte auf das Material wirken und zu einem erhöhten Materialverschleiss führen.

Es sind für Anwendungen in den genannten Fördersystemen auch sogenannte Saitenantriebe vorgeschlagen worden, wie beispielsweise in der Publikation EP-0936161 (F482) beschrieben. Eine angetriebene Saite wird dabei parallel zum Förderweg der Förderelemente bewegt und die Förderelemente werden für eine Antriebsfunktion mit geeigneten Mitteln im wesentlichen reibschlüssig an die Saite angekoppelt. Da die Saite im Gegensatz zu Zahnrädern oder Zahnriemen ein sozusagen kontinuierliches Kopplungsmittel darstellt, können die Förderelemente unabhängig von einem Fördertakt angekoppelt werden. Da aber durch Schlupf zwischen Saite und Förderelementen ein hoher Materialverschleiss entsteht, muss Schlupf möglichst vermieden werden, so dass auch in einem solchen System die Antriebsgeschwindigkeit, das heisst die Geschwindigkeit der Antriebssaite, diktierend ist. Das heisst mit anderen Worten, dass Förderelemente zwar unabhängig von einem Fördertakt, also mit beliebigen Abständen voneinander antreibbar sind, dass sie aber im an die Saite angekoppelten Zustand nur die Geschwindigkeit der Saite haben können, was zu den bereits oben im Zusammenhang mit gezahnten Antriebsmitteln genannten Nachteilen führt.

Aus der Publikation WO-99/33731 ist es auch bekannt, die Förderelemente eines Fördersystems der genannten Art anzutreiben, indem sie mit Hilfe einer magnetischen Anziehungskraft, die im wesentlichen quer zum Förderweg wirkt, an Antriebselemente gekoppelt werden und indem die Antriebselemente ihrerseits mit Hilfe von Zahnrädern oder ähnlichen Mitteln in einem Antriebsbereich parallel zum Förderweg der Förderelemente bewegt werden. Wenn die zu koppelnden Teile von Förderelementen und Antriebselementen entsprechend flach ausgebildet sind, ergibt eine solche magnetische Ankoppelung einen Antrieb ohne vorgegebenen Takt und, da Schlupf zwischen den Förderelementen und den Antriebselementen mit geringerem Materialverschleiss verbunden ist, als dies bei dem oben genannten Saitenantrieb der Fall ist, auch ohne zwingend vorgegebene Geschwindigkeit für die Förderelemente. Mit einem derartigen Antrieb wird es beispielsweise möglich, Förderelemente fast ruckfrei in den Wirkungsbereich des Antriebs zu bringen oder Förderelemente in einen Puffer mit variabler Länge zu stossen, in welchem Puffer die Förderelemente eine von der Antriebsgeschwindigkeit verschiedene Fördergeschwindigkeit haben oder gegebenenfalls sogar stillstehen.

Die Publikation US-5277125 beschreibt ein System mit Wagen für den Warentransport. Die Wagen laufen auf Schienen und werden mit nach dem Wirbelstromprinzip arbeitenden Antrieben angetrieben. In einem leitenden Material werden durch ein sich zeitlich veränderndes Magentfeld Wirbelströme erzeugt, wodurch Kräfte entstehen, die der Veränderung entgegenwirken. Der nach dem Wirbelstromsystem arbeitende Antrieb nützt diesen Effekt aus. Im System gemäss US-5277125 weisen die Wagen leitende Teile auf und die Antriebe weisen zur Erzeugung eines sich zeitlich ändernden Magnetfeldes Reihen von Magnetelementen auf, wobei die Reihen parallel zum Förderweg ausgerichtet sind. Die Magentelement-Reihen und die leitenden Teile der Wagen sind relativ zueinander derart angeordnet, dass die leitenden Teile im Magnetraum der Magnetelement-Reihe positioniert sind. Die Magnetelement-Reihen bestehen im wesentlichen aus Spulen, die mit phasenverschobenen Wechselströmen gespiesen werden. Für die Bremsung der Wagen werden auch Reihen von alternierend angeordneten, stationären Permanentmagneten vorgeschlagen.

Die Erfindung stellt sich nun die Aufgabe, ein Fördersystem der oben genannten Art zu schaffen, in welchem Fördersystem auf entlang von Förderwegen verfahrbare Förderelemente durch mindestens ein im wesentlichen ortsfestes, nach dem wirbelstromprinzip arbeitendes Antriebsmittel in einem Antriebsbereich eine beschleunigende oder bremsende Wirkung ausgeübt wird, und zwar derart, dass weder der Fördertakt noch die Fördergeschwindigkeit der Förderelemente durch den Antrieb zwingend vorgegeben sind. Trotzdem soll der Antrieb vorrichtungsmässig und steuerungsmässig einfach sein und im wesentlichen ohne Materialverschleiss funktionieren.

Diese Aufgabe wird gelöst durch das Fördersystem, wie es in den Patentansprüchen definiert ist.

Das Antriebsmittel des erfindungsgemässen Fördersystems arbeitet wie der Antrieb gemäss US-5277125 nach dem Wirbelstromprinzip. Das notwendige sich zeitlich ändernde Magnetfeld in einem leitenden Teil erzeugt wird durch eine Relativbewegung zwischen diesem leitenden Teil und einem sich in Richtung der Relativbewegung örtlich verändernden Magnetfeld mit Feldlinien-Komponenten quer zur Richtung der Relativbewegung.

Diese Relativbewegung wird erzeugt durch Bewegung der Förderelemente entlang des Förderweges durch den Antriebsbereich und durch Bewegung der Magnetelement-Reihe oder von Teilen davon im wesentlichen parallel zum Förderweg.

In der Magnetelement-Reihe alternieren Magnetelemente, die ein Magnetfeld erzeugen, mit Elementen, die ein anderes Magnetfeld erzeugen, oder mit Elementen die kein Magnetfeld erzeugen. Die verschiedene Magnetfelder erzeugenden Elemente sind beispielsweise permanent-magnetische Nord- und Südpole, die in der Reihe alternierend nebeneinander angeordnet sind.

Die Grösse der bremsenden oder beschleunigenden Wirkung, die zwischen dem Antriebsmittel und den Förderelementen erzeugt werden kann, ist abhängig von der Grösse der zeitlichen Veränderung des Magnetfeldes, also von der Stärke der durch die Magnetelemente erzeugten magnetischen Felder, von der Verschiedenheit der von den Magnetelementen verschiedener Typen erzeugten magnetischen Felder, von der Distanz zwischen den Magnetelementen in der Magnetelement-Reihe, von der relativen Geschwindigkeit zwischen Magnetelement-Reihe und Förderelementen und von der Distanz zwischen den leitenden Teilen der Förderelemente und den Magnetelementen. Mit einem vorgegebenen Antriebsmittel werden bremsende oder beschleunigende Kräfte erzeugt, die im wesentlichen proportional zur Geschwindigkeit der Relativbewegung und proportional zum Quadrat der Distanz zwischen Magnetelement-Reihe und leitenden Teilen ist.

Wenn die Magnetelement-Reihe im wesentlichen parallel zum Förderweg und in zur Förderrichtung entgegengesetzter Richtung bewegt wird, kann sie nur bremsend auf Förderelemente wirken. Wenn die Magnetelement-Reihe im wesentlichen parallel zum Förderweg und mit der Förderrichtung gleichgerichtet bewegt wird, wirkt sie bremsend auf Förderelemente mit einer Geschwindigkeit, die grösser ist als die Geschwindigkeit der Magnetelement-Reihe und beschleunigend auf Förderelemente mit einer kleineren Geschwindigkeit.

In einer bevorzugten Ausführungsform des erfindungsgemässen Fördersystems weist das Antriebsmittel eine ringförmige Reihe von alternierend angeordneten Permanentmagneten auf, derart, dass den leitenden Teilen Süd- und Nordpole alternierend zugewendet sind. Die Permanentmagnete sind mit möglichst kleinen Abständen voneinander beispielsweise auf einer rotierenden Scheibe oder einem umlaufenden Fördermittel angeordnet. Scheibe und Umlenkungen des Fördermittels drehen sich dabei um Achsen, die im wesentlichen quer zum Förderweg und von diesem beabstandet angeordnet sind, derart, dass der dem Förderweg am nächsten liegende Teil der Magnetelement-Reihe eine Umlaufrichtung aufweist, die parallel zum Förderweg verläuft oder eine zum Förderweg parallele Tangente hat.

Um Beschleunigungen der Förderelemente quer zum Förderweg, möglichst zu vermeiden, sind vorteilhafterweise in einem Antriebsbereich zwei einander möglichst genau gegenüberliegende, gleiche Reihen von Magnetelementen vorgesehen, die mit gleichen Geschwindigkeiten in entgegengesetzten Richtungen umlaufen.

Die leitenden Teile der Förderelemente bestehen vorteilhafterweise aus einem paramagnetischen Material, beispielsweise aus Aluminium, und ragen quer zum Förderweg in den Magnetraum der Magnetelement-Reihe, wobei die Distanz zwischen leitenden Teilen und Magnetelementen, so klein wie möglich ist. Die leitenden Teile sind derart ausgelegt, dass zwischen leitenden Teilen benachbarter Förderelemente keine leitende Verbindung entsteht, auch wenn die Förderelemente sich in dichter Aufeinanderfolge durch den Antriebsbereich bewegen.

Zur Steuerung der beschleunigenden oder bremsenden Wirkung der Antriebsmittel sind beispielsweise die Umlaufgeschwindigkeit der Magnetelement-Reihe und/oder die Distanz zwischen Magnetelementen und leitenden Teilen einstellbar. Bei der Verwendung eines elektrisch erzeugten Magnetfeldes kann auch die Stärke dieses Feldes einstellbar sein.

Beispielhafte Ausführungsformen des erfindungsgemässen Fördersystems werden im Zusammenhang mit den folgenden Figuren mehr im Detail beschrieben. Dabei zeigen:
- **Figur 1**: einen Ausschnitt aus einer beispielhaften Ausführungsform des erfindungsgemässen Fördersystems mit Magnetelement-Reihen auf rotierenden Antriebsscheiben;
- **Figuren 2 und 3**: zwei Beispiele von Antriebsscheiben für das Fördersystem gemäss Figur 1;
- **Figur 4**: einen Ausschnitt aus einer weiteren, beispielhaften Ausführungsform des erfindungsgemässen Fördersystems mit Magnetelement-Reihen auf umlaufenden Antriebsriemen;
- **Figur 5**: ein Detail eines beispielhaften Antriebsriemens für das Fördersystem gemäss Figur 4;
- **Figuren 6 und 7**: eine weitere, beispielhafte Ausführungsform des erfindungsgemässen Fördersystems in dreidimensionaler Darstellung (Figur 6) und im Schnitt quer zum Förderweg (Figur 7).

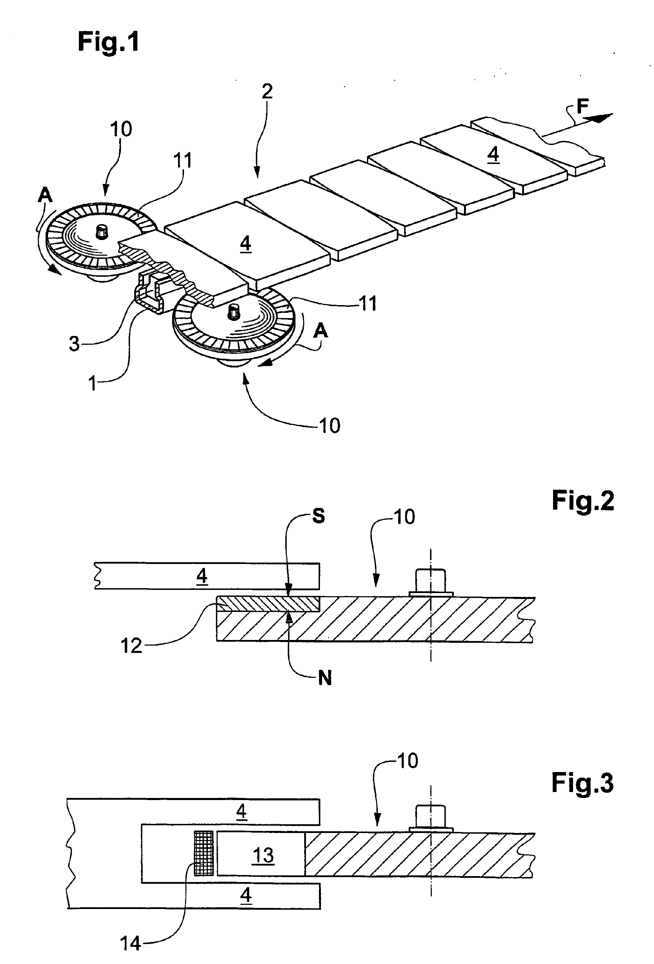

**Figur 1** zeigt sehr schematisch einen Ausschnitt aus einem Förderweg einer beispielhaften Ausführungsform des erfindungsgemässen Fördersystems. Die Figur zeigt ein Führungsmittel 1, beispielsweise einen Führungskanal, durch den der Förderweg definiert ist und eine Mehrzahl von entlang des Förderweges verfahrbaren Förderelementen 2, von denen nur im Führungskanal 1 geführte Roll- oder Gleitkörper 3 und sich flächig ausserhalb des Führungskanals 1 erstreckende, leitende Teile 4 dargestellt sind. Die Förderelemente 2 sind in dichter Aufeinanderfolge dargestellt, das heisst, sie sind in dieser Konfiguration zu einer Kette miteinander verbunden oder sie sind voneinander mehr oder weniger unabhängig und werden einander stossend angetrieben. Die leitenden Teile 4 sind derart dimensioniert und ausgestaltet, dass auch in einer derart dichten Aufeinanderfolge von Förderelementen 2 keine leitenden Kontakte zwischen den leitenden Teilen 4 benachbarter Förderelemente 2 entstehen.

Die Förderelemente 2 können ferner beispielsweise je einen Greifer (nicht dargestellt) aufweisen oder ein anderes Mittel zum Festhalten eines zu fördernden Gegenstandes. Sie können aber auch keine derartigen Haltemittel aufweisen und als Kraftübertragungsmittel für eine weiter entfernte Förderung oder andere Bewegung dienen.

Als Antriebsmittel sind beidseitig des Führungskanals 1 je eine rotierende Antriebsscheibe 10 vorgesehen, deren Achsen quer zum Förderweg stehen und von diesem beabstandet sind und auf deren gegen die leitenden Teile 4 gewendeten Seite eine entlang der Peripherie verlaufende, ringförmige Magnetelement-Reihe 11 verläuft. Die Magnetelemente der Reihe sind beispielsweise abwechselnd orientierte Permanentmagneten (siehe Figuren 2 und 3).

Die Antriebsrichtung A, in der die Antriebsräder 10 rotierend angetrieben werden, ist derart gewählt, dass die mit den leitenden Teilen 4 in Wechselwirkung stehenden Teile der Magnetelement-Reihe 11 sich auf einem Kreisbogen bewegen, dessen mittlere Tangente parallel zur Förderrichtung F verläuft, wobei die Bewegungen von Förderelementen 2 und Magnetelementen gleichgerichtet ist.

In der Figur 1 sind die Scheiben 10 im wesentlichen horizontal angeordnet. Dies ist keine Bedingung für das erfindungsgemässe Fördersystem. Die Scheiben können irgend eine räumliche Orientierung haben.

**Figuren 2 und 3** zeigen zwei Beispiele von Antriebsscheiben 10, die in erfindungsgemässen Fördersystemen gemäss Figur 1 als Antriebsmittel verwendet werden können. In beiden Figuren sind die Antriebsscheiben entlang ihrer Achse geschnitten dargestellt und sind auch entsprechende leitende Teile 4 angedeutet.

Die Antriebsscheibe 10 gemäss Figur 2 weist eine ringförmige Reihe von Permanentmagneten 12 auf, von denen je ein Pol gegen den leitenden Teil 4 gewendet ist, wobei dieser Pol abwechselnd der Südpol S und der Nordpol N ist. Zur Richtung des Magnetfeldes gegen den leitenden Teil 4 besteht die Auflage der Permanentmagnete 12 vorteilhafterweise aus Eisen. Als Permanentmagnete eignen sich insbesondere durchmagnetisierte und nickelbeschichtete NbFeB-Platten von beispielsweise 5mm Dicke. Die Distanz zwischen Permanentmagneten 12 und leitendem Teil 4 soll möglichst klein sein, beispielsweise 0,5 bis 2 mm.

In analoger Weise, wie in der Figur 2 dargestellt, können die Permanentmagnete 12 auch auf der Umfangsfläche der Antriebsscheibe 10 angeordnet sein, wenn die leitenden Teile 4 entsprechend ausgestaltet und angeordnet sind.

Die Antriebsscheibe 10 gemäss Figur 3 besteht beispielsweise aus Stahl oder einem anderen ferromagnetischen Material, weist an der Peripherie als Magnetelemente Zähne 13 und zwischen Zähnen Zwischenräume auf und rotiert in einer Spule 14, die von einem Gleichstrom durchflossen wird und dadurch im Bereich der Zähne ein homogenes Magnetfeld erzeugt. Der leitende Teil 4 ist in diesem Falle vorteilhafterweise derart ausgestaltet, dass er beiden Seiten der Antriebsscheibe 10 sehr nahe kommt.

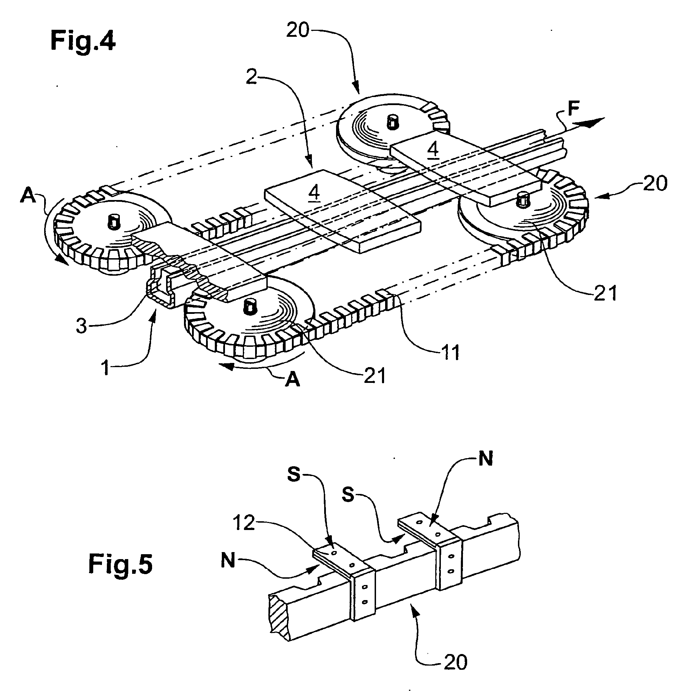

**Figur 4** zeigt ein ähnliches Beispiel eines erfindungsgemässen Fördersystems wie Figur 1. Dieses weist als Antriebsmittel umlaufende Antriebsriemen 20 auf. Die Antriebsriemen 20 sind als Zahnriemen ausgebildet und tragen, wie dies in der **Figur 5** im Detail dargestellt ist, an derjenigen Kante, die den leitenden Teilen 4 der Förderelemente 2 zugewandt sind, Magnetelement-Reihen, die aus alternierend angeordneten Permanentmagneten 12 bestehen.

Die Antriebsriemen 20 laufen beispielsweise über zwei Umlenkrollen 21, deren Achsen quer zum Förderweg ausgerichtet sind, wobei der Abstand zwischen dem Führungskanal 1 und diesen Achsen gleich gross ist und derart gewählt, dass ein antreibender Teil der Magnetelement-Reihe 11 mit Förderelementen 2 im Antriebsbereich in Wechselwirkung steht.

Auch von den Antriebsriemen 20 sind vorteilhafterweise zwei einander gegenüberliegend und in entgegengesetzten Richtungen A derart umlaufend angeordnet, dass der antreibende Teil der beiden Magnetelement-Reihen 11 parallel zum Förderweg, bzw. zum Führungskanal 1 bewegt wird. Bei entsprechender Ausgestaltung der leitenden Teile 4 können die Magnetelemente auch auf der Fläche des Antriebsriemens 20 angeordnet sein anstatt an seiner Kante.

Die in der Figur 4 dargestellten Förderelemente 2 sind dieselben wie die Förderelemente der Figur 1, sind aber hier voneinander unabhängig und haben verschiedene Abstände voneinander.

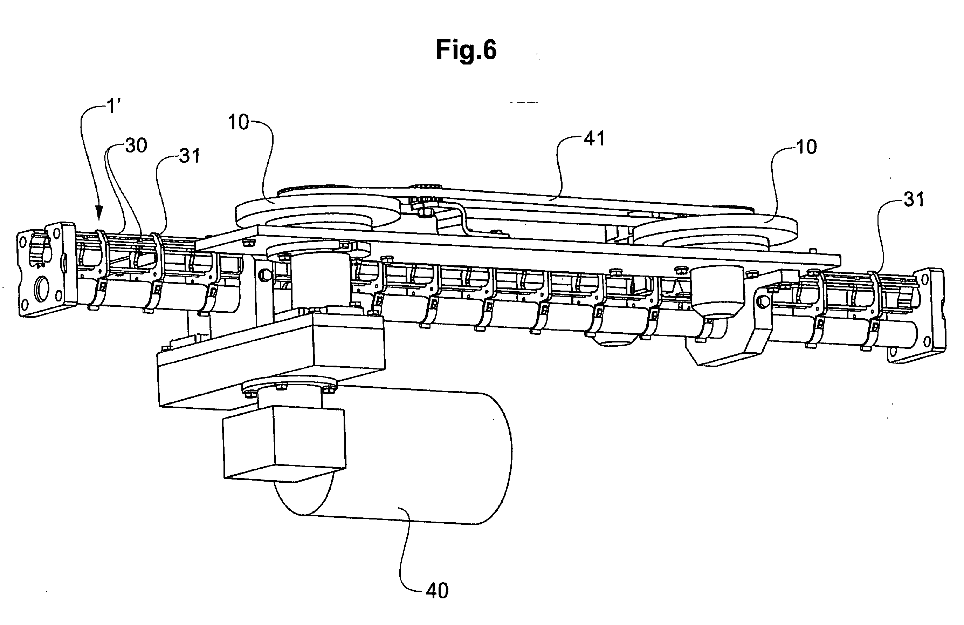

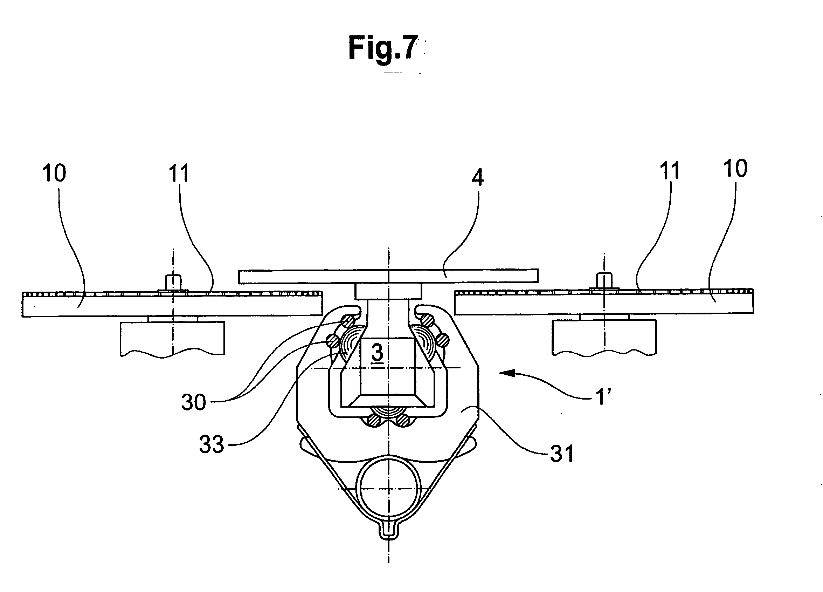

**Figuren 6 und 7** zeigen mehr im Detail eine weitere, beispielhafte Ausführungsform der erfindungsgemässen Fördervorrichtung als dreidimensionale Darstellung (Figur 6) und quer zum Förderweg geschnitten (Figur 7).

Der Förderweg ist definiert durch eine kanalartige Schienenanordnung 1', die im wesentlichen aus parallel zueinander angeordneten Schienen 30 besteht und von voneinander beabstandeten Haltestegen 31 gehalten wird. In dieser kanalartigen Schienenanordnung 1' sind Rollkörper 3 geführt, die je mindestens eine Gruppe von drei Kugeln 33 aufweisen. Die Kugeln rollen aufeinander und je auf zwei Schienen 30 und erlauben eine äusserst reibungsarme Bewegung der Rollkörper 3 entlang der Schienenanordnung 1'. An den Rollkörpern 3 sind leitende Teile 4 befestigt, die sich ausserhalb der kanalartigen Schienenanordnung 1' flächig nach zwei Seiten des Führungsweges erstrecken.

Als Antriebsmittel sind zwei einander gegenüberliegende Paare von Antriebsscheiben 10 vorgesehen, wobei die Antriebsscheiben jedes Paares hintereinander entlang der Schienenanordnung 1' angeordnet sind und wobei die beiden Paare von Antriebsscheiben einander symmetrisch in Bezug auf die Schienenanordnung 1' gegenüberliegen.

Für den Antrieb der vier Antriebsscheiben 10 ist ein einziger Motor 40 vorgesehen. Dieser treibt die Wellen je einer ersten Antriebsscheibe der beiden Paare über beispielsweise Zahnradgetriebe. Die Wellen der beiden Antriebsscheiben jedes Paares sind über Riemen 41 miteinander verbunden.

Es ist für die Erfindung keine Bedingung, dass der leitende Teil 4 der Förderelemente 2 sich ausserhalb eines Führungskanals 1 oder einer kanalartigen Schienenanordnung 1' erstreckt, in der die Förderelemente 2 geführt sind. Insbesondere mit einem Führungsmittel, wie es in den Figuren 6 und 7 dargestellt ist, ist es offensichtlich auch möglich, den leitenden Teil 4 im Inneren der Schienenanordnung 1' vorzusehen und beispielsweise eine Antriebsscheibe 10 zwischen zwei Haltestegen 31 und zwischen zwei Schienen 30 hindurch mit dem leitenden Teil 4 in Wechselwirkung zu bringen.

## Patentansprüche

1. Fördersystem mit vorgegebenen Förderwegen, mit entlang der Förderwege bewegbaren Förderelementen (2) und mit mindestens einem Antriebsmittel, das ortsfest im Bereiche eines der Förderwege angeordnet ist und in einem Antriebsbereich dieses Förderweges beschleunigend oder bremsend auf Förderelemente (2) wirkt, wobei das Antriebsmittel eine Mehrzahl von in einer Reihe (11) angeordneten Magnetelementen (12) aufweist, die ein entlang der Magnetelement-Reihe (11) sich veränderndes Magnetfeld erzeugen, wobei mindestens ein Teil der Magnetelement-Reihe (11) im Antriebsbereich im wesentlichen parallel zum Förderweg angeordnet ist, wobei die Förderelemente (2) je einen Teil (4) aus einem elektrisch leitenden Material aufweisen, welcher leitende Teil (4) derart am Förderelement (2) angeordnet ist, dass er im Antriebsbereich im Magnetraum der Magnetelement-Reihe (11) positioniert ist und bei einer Relativbewegung parallel zum Förderweg zwischen Magnetelement-Reihe (11) und leitendem Teil (4) im leitenden Teil (4) erzeugte Wirbelströme Kräfte bewirken, die der Relativbewegung entgegenwirken, wobei die Magnetelement-Reihe (11) eine Reihe von alternierend angeordneten Permanentmagneten (12) oder eine Reihe von voneinander beabstandeten Zähnen (13) aus einem ferromagnetischen Material ist, welche Reihe von Zähnen in einem elektrisch erzeugten, im wesentlichen homogenen Magnetfeld positioniert ist, und wobei die Magnetelement-Reihe (11) oder ein antreibender Teil davon für eine beschleunigende oder bremsende Wirkung auf Förderelemente (2) im Antriebsbereich parallel zum Förderweg bewegbar ist.

2. Fördersystem nach Anspruch 1, wobei zur Steuerung der bremsenden oder beschleunigenden Wirkung die Geschwindigkeit (A) der Magnetelement-Reihe (11) variierbar ist

3. Fördersystem nach Anspruch 1 oder 2, wobei die Magnetelement-Reihe (11) ringförmig, umlaufend angetrieben und auf der einen Seite des Förderweges angeordnet ist, derart, dass ein dem Förderweg nächster, antreibender Teil der Magnetelement-Reihe (11) parallel zum Förderweg bewegt wird.

4. Fördersystem nach Anspruch 3, wobei die ringförmige Magnetelement-Reihe (11) kreisförmig auf einer Antriebsscheibe (10) angeordnet ist, welche Antriebsscheibe (10) derart positioniert ist, dass der Förderweg tangential dazu ausgerichtet ist.

5. Fördersystem nach Anspruch 3, wobei die Magnetelement-Reihe (11) an einem endlosen Antriebsriemen (20) angeordnet ist.

6. Fördersystem nach Anspruch 5, wobei der Antriebsriemen (20) über zwei entlang des Förderweges hintereinander angeordnete Umlenkrollen (21) geführt ist, welche Umlenkrollen (21) senkrecht zum Förderweg ausgerichtete Achsen aufweisen.

7. Fördersystem nach einem der Ansprüche 1 bis 6, wobei im Antriebsbereich zwei einander gegenüberliegende, in entgegengesetzten Richtungen umlaufende Magnetelement-Reihen (11) vorgesehen sind und wobei der leitende Teil (4) der Förderelemente (2) derart ausgestaltet ist, dass er durch den Magnetraum beider Magnetelement-Reihen (11) bewegt wird.

8. Fördersystem nach einem der Ansprüche 1 bis 7, wobei die Förderwege mindestens teilweise durch Führungskanäle (1) oder kanalartige Schienenanordnungen (1') definiert sind und wobei ein Roll- oder Gleitteil (3) jedes Förderelementes (2) im Führungskanal (1) oder in der Schienenanordnung (1') positioniert ist und der leitende Teil (4) aus dem Führungskanal (1) oder aus der Schienenanordnung (1') ragt.

9. Fördersystem nach einem der Ansprüche 1 bis 8, wobei eine Distanz zwischen der Magnetelement-Reihe (11) und dem leitenden Teil (4) der Förderelemente (2) einstellbar ist.

## Claims

1. A conveyor system with predetermined conveyor paths, with conveyor elements (2) movable along the conveyor paths and with at least one drive means arranged stationary in the region of one of the conveyor paths and acting in a drive region of this conveyor path on the conveyor elements (2) in an accelerating or braking manner, wherein the drive means comprises a plurality of magnet elements (12) arranged in a row (11) and producing a magnetic field changing along the magnet element row, wherein in the drive region at least part of the magnet element row (11) is arranged essentially parallel to the conveyor path, wherein each conveyor element (2) comprises a part (4) of electrically conducting material, said conducting part (4) being arranged on the conveyor element (2) such that in the drive region it is positioned in the effective range of the magnet element row (11) and such that a relative movement parallel to the conveyor path between the magnet element row (11) and the conducting part (4) produces eddy currents in the conducting part (4) and therewith forces counteracting the relative movement, wherein the magnet element row (11) is a row of altematingly arranged permanent magnets (12) or a row of teeth (13) consisting of a ferromagnetic material and being distanced from one another, said row of teeth being positioned in an electrically produced, essentially homogeneous magnetic field, and wherein for an accelerating or braking effect on conveyor elements (2), the magnet element row (11) or a driving part thereof is movable parallel to the conveyor path in the drive region.

2. Conveyor system according to claim 1, wherein for controlling the braking or accelerating effect the speed (A) of the magnet element row (11) is adjustable.

3. Conveyor system according to claim 1 or 2, wherein the magnet element row (11) is annular, revolvingly driven and is arranged on the one side of the conveyor path in a manner such that a driving part of the magnet element row (11), closest to the conveyor path, is moved parallel to the conveyor path.

4. Conveyor system according to claim 3, wherein the annular magnet element row (11) is arranged circularly on a drive disk (10), said drive disk (10) being positioned in a manner such that the conveyor path is aligned tangentially thereto.

5. Conveyor system according to claim 3, wherein the magnet element row (11) is arranged on an endless drive belt (20).

6. Conveyor system according to claim 5, wherein the drive belt (20) is guided over two deflection rollers (21) arranged behind one another along the conveyor path, said deflection rollers (21) having axes directed perpendicular to the conveyor path.

7. Conveyor system according to any of claims 1 to 6, wherein in the drive region two magnet element rows (11) lying opposite one another and revolving in opposite directions are provided, and wherein the conducting part (4) of the conveyor elements (2) is designed such that it is moved through the effective range of both magnet element rows (11).

8. Conveyor system according to any one of claims 1 to 7, wherein the conveyor paths are defined at least partly by guide channels (1) or channel-like rail arrangements (1') and wherein a roller or sliding part (3) of each conveyor element (2) is positioned in the guide channel (1) or in the rail arrangement (1') and the conducting part projects out of the guide channel (1) or out of the rail arrangement (1').

9. Conveyor system according to any one of claims 1 to 8, wherein a distance between the magnet element row (11) and the conducting part (4) of the conveyor elements (2) is adjustable.

## Revendications

1. Système de transport avec des parcours de transport prédéterminés, avec des éléments de transport (2) déplaçables le long des parcours de transport et avec au moins un moyen d'entraînement qui est disposé fixement dans la zone de l'un des parcours de transport et qui exerce une action d'accélération ou de freinage sur les éléments de transport (2) dans une zone d'entraînement de ce parcours de transport, le moyen d'entraînement comportant une pluralité d'éléments magnétiques (12) disposés sur une rangée (11) qui génèrent un champ magnétique variant le long de la rangée (11) d'éléments magnétiques, au moins une partie de la rangée (11) d'éléments magnétiques étant disposée sensiblement parallèlement au parcours de transport dans la zone d'entraînement, les éléments de transport (2) comprenant chacun une partie (4) constituée d'un matériau électro-conducteur, laquelle partie conductrice (4) est disposée sur l'élément de transport (2) de manière à être positionnée, dans la zone d'entraînement, dans le compartiment magnétique de la rangée (11) d'éléments magnétiques et, lors d'un mouvement relatif parallèle au parcours de transport entre la rangée (11) d'éléments magnétiques et la partie conductrice (4), des courants de Foucault générés dans la partie conductrice (4) provoquent des forces qui s'opposent au mouvement relatif, dans lequel la rangée (11) d'éléments magnétiques est une rangée d'aimants permanents alternants (12) ou une rangée de dents espacées les unes des autres (13) constituées d'un matériau ferromagnétique, laquelle rangée de dents est positionnée dans un champ magnétique généré électriquement, sensiblement homogène, et la rangée (11) d'éléments magnétiques ou une partie motrice de celle-ci est déplaçable pour exercer une action d'accélération ou de freinage sur les éléments de transport (2) dans la zone d'entraînement parallèle au parcours de transport.

2. Système de transport selon la revendication 1, dans lequel la vitesse (A) de la rangée (11) d'éléments magnétiques peut varier pour commander l'action d'accélération ou de freinage.

3. Système de transport selon la revendication 1 ou 2, dans lequel la rangée (11) d'éléments magnétiques est entraînée circulairement en forme d'anneau et est placée d'un côté du parcours de transport de manière à ce qu'une partie motrice de la rangée (11) d'éléments magnétiques proche du parcours de transport soit déplacée parallèlement au parcours de transport.

4. Système de transport selon la revendication 3, dans lequel la rangée (11) d'éléments magnétiques en forme d'anneau est placée circulairement sur un disque d'entraînement (10), lequel disque d'entraînement (10) est positionné de telle manière que le parcours de transport est orienté tangentiellement à celui-ci.

5. Système de transport selon la revendication 3, dans lequel la rangée (11) d'éléments magnétiques est placée sur une courroie d'entraînement sans fin (20).

6. Système de transport selon la revendication 5, dans lequel la courroie d'entraînement (20) est guidée par deux rouleaux de renvoi (21) disposés l'un derrière l'autre le long du parcours de transport, lesquels rouleaux de renvoi (21) présentent des axes orientés verticalement par rapport au parcours de transport.

7. Système de transport selon l'une quelconque des revendications 1 à 6, dans lequel il est prévu, dans la zone d'entraînement, deux rangées (11) d'éléments magnétiques opposées, circulant dans des directions opposées, et dans lequel la partie conductrice (4) des éléments de transport (2) est configurée de telle manière qu'elle est déplacée par le compartiment magnétique des deux rangées (11) d'éléments magnétiques.

8. Système de transport selon l'une quelconque des revendications 1 à 7, dans lequel les parcours de transport sont définis au moins partiellement par des caniveaux de guidage (1) ou des agencements de rails (1') semblables à des caniveaux et dans lequel une partie de roulement ou de glissement (3) de chaque élément de transport (2) est positionnée dans le caniveau de guidage (1) ou dans l'agencement de rails (1') et la partie conductrice (4) fait saillie hors du caniveau de guidage (1) ou de l'agencement de rails (1').

9. Système de transport selon l'une quelconque des revendications 1 à 8, dans lequel une distance entre la rangée (11) d'éléments magnétiques et la partie conductrice (4) des éléments de transport (2) est réglable.
